Europäisches Patentamt

European Patent Office

Office européen des brevets

(11) Veröffentlichungsnummer: **0 322 467**
**A1**

## EUROPÄISCHE PATENTANMELDUNG

(21) Anmeldenummer: 87119196.1

(22) Anmeldetag: 24.12.87

(51) Int. Cl.⁴: **G03B 15/06**

(43) Veröffentlichungstag der Anmeldung:
05.07.89 Patentblatt 89/27

(84) Benannte Vertragsstaaten:
**AT BE CH DE ES FR GB GR IT LI LU NL SE**

(71) Anmelder: **REFLECTA GMBH FOTO FILM PROJEKTION**
**Berlichingenstrasse 9**
**D-8540 Schwabach(DE)**

(72) Erfinder: **Der Erfinder hat auf seine Nennung verzichtet**

(74) Vertreter: **LOUIS, PÖHLAU, LOHRENTZ & SEGETH**
**Kesslerplatz 1 Postfach 3055**
**D-8500 Nürnberg(DE)**

(54) Film- oder Videoleuchte.

(57) Bei einer Film- oder Videoleuchte mit Lichtklappen (18), die durch Reibschluß in jeder Schwenkstellung festgehalten werden sollen, wird einem Verlust des Reibschlusses dadurch entgegengewirkt, daß in einer feststehenden Lagerhülse (12) ein elastisches Element (22) vorgesehen wird, das gegen die die Lagerhülse (12) umgreifende Hülse (18') der Lichtklappe drückt.

EP 0 322 467 A1

## Film- oder Videoleuchte

Die Erfindung betrifft eine Film- oder Videoleuchte mit einem Gehäuse und mit einer an einem Teil des Gehäuses um eine geometrische Achse verschwenkbar befestigten Lichtklappe.

Bei einer bspw. aus DE-AI-31 17 130 bekannten Filmleuchte dieser Art ist die Lichtklappe drehfest mit einer als Drehachse dienenden Stange verbunden, deren Enden jeweils zwischen zwei Klemmbacken eingespannt sind, die jeweils mittels einer Schraube gegeneinander gedrückt werden können. Die Klemmbacken dienen als Drehlager, die kraft schlüssig die Enden der Stange erfassen, so daß die Lichtklappe in jeder Schwenkstellung kraft schlüssig festgehalten wird. Ein sich während des Gebrauchs der Filmleuchte aufgrund der Tem-peraturschwankungen bei eingeschalteter und aus-geschalteter Filmleuchte entstehendes Spiel im Drehlager kann mit Hilfe der Schrauben ausgeglichen werden, die bei Bedarf festgezogen werden müssen. Zwar kann sich bei dieser bekannten Filmleuchte im Laufe der Zeit ein lockerer Sitz der Stangenenden in den Drehlagern ergeben, so daß die Lichtklappen nicht mehr in jeder beliebigen Schwenkstellung festgehalten werden, jedoch kann dieser lockere Sitz der Stangenenden durch Nachziehen der Schrauben jederzeit beseitigt werden. Das von Zeit zu Zeit zu erfolgende Nachziehen der Schrauben wird nun als unbequem empfunden, vor allen Dingen dann, wenn dieses Nachziehen bei der heißen Filmleuchte durchgeführt werden soll.

Der Erfindung liegt daher die Aufgabe zugrunde, eine Film-oder Videoleuchte der eingangs genannten Art derart auszubilden, daß die Lichtklappe bzw. die Lichtklappen sich nicht mehr mit der Zeit lockern, sondern vielmehr auf Dauer reibungsschlüssig in jeder Schwenkstellung gehalten werden.

Diese Aufgabe wird erfindungsgemäß dadurch gelöst, daß eine drehfest mit dem Gehäuseteil verbundene Lagerhülse entlang der geometrischen Schwenkachse vorgesehen ist, daß die Lichtklappe eine die Lagerhülse außen umgreifende und gegenüber der Lagerhülse verdrehbare Hülse aufweist und daß innerhalb der Lagerhülse ein elastisches Element angeordnet ist, das durch eine Öffnung der Lagerhülse von innen gegen die Lichtklappenhülse drückt.

Das elastische Federelement hält kraftschlüssig bzw. durch Reibung die Lichtklappe in jeder Stellung fest und gleicht das beim Gebrauch der Filmleuchte bzw. aufgrund von Temperaturschwankungen üblicherweise entstehende Spiel aus. Das elastische Federelement ist mit anderen Worten eine selbsttätige Festspannvorrichtung, die aber ein mit genügendem Kraftaufwand erfolgendes Verschwenken der Lichtklappe erlaubt. Ein wiederholtes nachträgliches Festziehen wie beim Stand der Technik ist also nach der Erfindung nicht mehr erforderlich.

Zweckmäßigerweise ist das elastische Element eine flache Formfeder, die auf zwei entgegengesetzten Seiten durch Schlitze in der Lagerhülse auf die Lichtklappenhülse einwirkt.

In einer vorteilhaften Ausführungsform kann das elastische Element in Rastausnehmungen der Lagerhülse eingreifen, so daß sich zusätzliche Ar-retierungen in bestimmten Zwischenstellungen er-geben.

Erst die Verwendung einer Lagerhülse ermöglicht es auch gemäß einer weiteren Ausgestaltung einer erfindungsgemäßen Filmleuchte, bei der das Gehäuseteil verschwenkbar ist und die Lichtklappe an der freien, zur Schwenkachse entgegengesetzten Seite des Gehäuseteils vorgesehen ist, die mit einem selbsttätigen, ein federnbeaufschlagtes Verriegelungselement und eine mit ihm zusammenwir-kende Verriegelungsöffnung aufweisenden Verrie-gelungsmechanismus zusammenwirkt, diesen Ver-riegelungsmechanismus in geschickter Weise un-terzubringen, so daß die Filmleuchte bzw. Videoleuchte sehr kompakt gehalten wird, indem das Verriegelungselement als ein in der Lagerhülse in ihrer Längsrichtung zwischen zwei Stellungen verschiebbarer Verriegelungsstift ausgebildet wird, der von einem Federelement in der Lagerhülse in die eine Stellung beaufschlagt wird, in der er über das verschwenkbare Gehäuseteil vorspringt, und der mittels eines Betätigungsorgans gegen die Kraft des Federelementes in die andere Stellung verschiebbar ist, in der er nicht aus dem verschwenkbaren Gehäuseteil vorspringt.

Die mit dem Gehäuseteil drehfest verbundene Lagerhülse nimmt also sowohl die automatische Nachspanneinrichtung als auch die Verriegelungseinrichtung auf, wodurch sich eine besonders kompakte Bauweise der Filmleuchte ergibt.

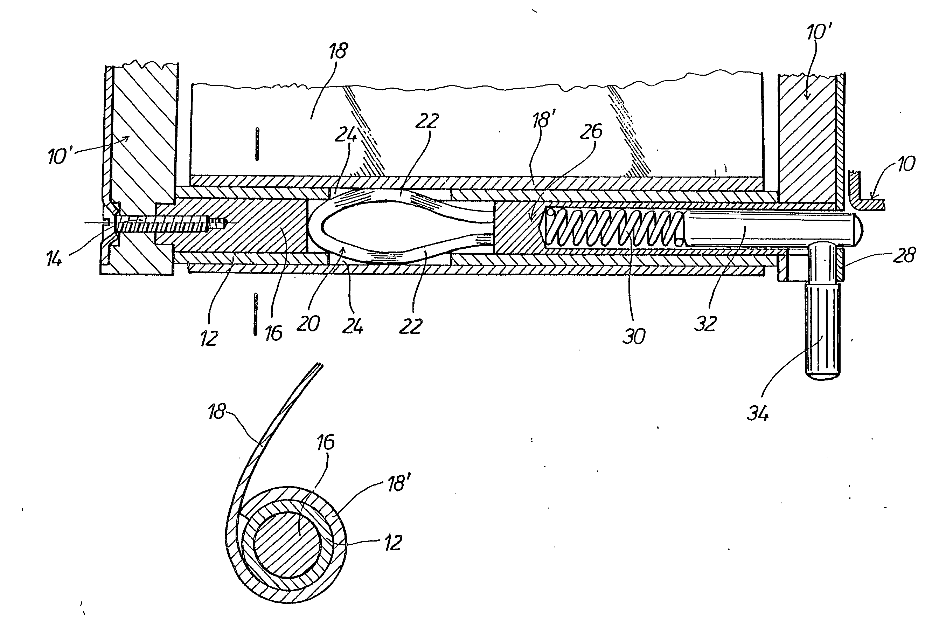

Die Erfindung wird nun an einem Ausführungsbeispiel und anhand der beiliegenden Zeichnung näher erläutert.

In der Zeichnung ist ein Schnitt durch einen Teil einer Film- bzw. Videoleuchte gezeigt. Die Leuchte weist ein Gehäuse 10 auf (sh. rechte Seite der Zeichnung), dessen Teil 10′ (sh. linke Seite des Gehäuses) um eine nicht gezeigte, in der Zeichnung oben liegende horizontale Achse gegenüber dem auf der rechten Seite liegenden Teil des Gehäuses 10 verschwenkbar ist. Es wird hier von einer Videoleuchte ausgegangen, wie sie in der europäischen Patentanmeldung No. 87 118 098.0 beschrieben ist. An dem verschwenkbaren Gehäuseteil 10' ist eine Lagerhülse 12 aus Stahl mittels einer Schraube 14 drehfest befestigt, die in ein fest mit der Lagerhülse 12 verbundenes Einsatzstück 16 wie gezeigt greift. Eine Lichtklappe 18 aus 0,8 mm starkem Stahlblech ist an der Lagerhülse 12 befestigt, indem das Stahlblech eng um die Lagerhülse 12 gewickelt wird. Die Lichtklappe 18 ist dann um die feststehende Lagerhülse 12 nach Überwindung des Reibschlusses zwischen dem Wickelteil 18' der Lichtklappe 18 und der Lagerhülse 12 verschwenkbar, wobei die Lichtklappe in jeder Schwenkstellung stehenbleibt, solange der Reibschluß ausreicht.

Nun nimmt aber im Laufe der Zeit der Reibschluß zwischen dem Wickelteil 18' und der Lagerhülse 12 durch häufiges Verschwenken der Lichtklappe 18 und durch die auftretenden großen Temperaturschwankungen bei eingeschalteter und ausgeschalteter Filmleuchte ab, so daß die Lichtklappe nicht mehr durch einen Reibschluß zwischen dem Winkelteil 18' und der Lagerhülse 12 in jeder gewünschten Stellung gehalten wird. Um diese Reduzierung des Reibschlusses auszugleichen, ist wie gezeigt eine flache Formfeder 20 in der Lagerhülse 12 untergebracht, die mit ihren Bäuchen 22 durch Längsschlitze 24 hindurchgreift und an zueinander entgegengesetzten Seiten des Wickelteils 18' der Lichtklappe 18 eingreift. Durch diesen Kraftschluß wird die Lichtklappe 18 immer in der gewünschten Schwenkstellung gehalten, auch wenn der Wickelteil 18' nur locker die Lagerhülse 12 umgreifen sollte. Die Längsschlitze 24 lassen nicht nur die Formfeder 20 durch die Lagerhülse 12 hindurchgreifen, sondern tragen mit dazu bei, daß die Formfeder 20 drehfest in der Lagerhülse 12 gehalten wird.

In dem gezeigten Ausführungsbeispiel ist die Formfeder aus einem U-förmigen Drahtstück mit rundem Querschnitt gebildet, dessen lange Schenkelstücke die nach außen gebogenen Bäuche 22 aufweisen. Selbstverständlich können auch andere geeignete elastische Elemente verwendet werden.

Die Drahtfeder würde in Richtung ihrer Längsachse, also der Längsachse der Lagerhülse 12, durch die Längsschlitze 24 festgehalten werden. In dem gezeigten Ausführungsbeispiel liegt jedoch die Drahtfeder an ihrem geschlossenen Ende an dem Einsatzstück 16 an und stützt sich mit ihrem offenen Ende an dem geschlossenen Ende einer in die Lagerhülse 12 eingesetzten Verriegelungshülse 26 ab. Je tiefer die Verriegelungshülse 26 in die Lagerhülse 12 eingesetzt wird, desto mehr wird die Formfeder 20 zusammengedrückt und wächst der Kraftschluß zwischen der Lichtklappe 18 und der Lagerhülse 12. Die Lagerhülse 12 liegt auf der in der Zeichnung rechten Seite am Gehäuseteil 10' an, das von der Verriegelungshülse 26 durchsetzt wird, die durch ein Abschlußblech 28 wie gezeigt in der Lagerhülse 12 gesichert ist. In der Verriegelungshülse 26 ist ein von einer Druckfeder 30 wie gezeigt beaufschlagter Verriegelungsstift 32 zwischen zwei Stellungen verschiebbar die durch zwei Anschläge eines am Verriegelungsstift 32 befestigten Betätigungsorgan 34 bestimmt sind. In der einen (gezeigten) Stellung springt der Verriegelungsstift 32 aus dem verschwenkbaren Gehäuseteil 10' vor und kann in eine nicht näher gezeigte Verriegelungsöffnung greifen, so daß das verschwenkbare Gehäuseteil 10' verriegelt ist. In der anderen Stellung, in der der Verriegelungsstift 32 mittels des Betätigungsorgans 34 entgegen der Kraft des Federelementes 30 zurückgeschoben ist, so daß er nicht mehr aus dem verschwenkbaren Gehäuseteil 10' hervorschaut, ist die Verriegelung gelöst und kann das Gehäuseteil 10' verschwenkt werden.

Die Verriegelungshülse 26 muß nicht starr mit der Lagerhülse 12 verbunden sein. Vielmehr kann die Verriegelungshülse 26 wie gesagt auf der einen Seite durch das Abschlußblech 28 gehalten werden und auf der anderen Seite durch die Anlage an der Formfeder 20, der das Federelement 30 entgegenwirkt, wie dies aus der Zeichnung klar wird.

## Ansprüche

1. Film- oder Videoleuchte mit einem Gehäuse (10) und mit einer an einem Teil (10') des Gehäuses um eine geometrische Achse verschwenkbar befestigten Lichtklappe (18), **dadurch gekennzeichnet,**
daß eine drehfest mit dem Gehäuseteil (10') verbundene Lagerhülse (12) entlang der geometrischen Achse vorgesehen ist, daß die Lichtklappe (18) eine die Lagerhülse (12) aussen umgreifende und gegen die Lagerhülse (12) verdrehbare Hülse (18') aufweist und daß innerhalb der Lagerhülse (12) ein elastisches Element (20) angeordnet ist, das durch eine Öffnung (24) der Lagerhülse von innen gegen die Lichtklappenhülse (18') drückt.

2. Film- oder Videoleuchte nach Anspruch 1, **dadurch gekennzeichnet,** daß das elastische Element (20) eine Formfeder ist, die mindestens auf zwei entgegengesetzten Seiten durch die schlitzförmigen Öffnugn (24) der Lagerhülse (12) greift.

3. Film- oder Videoleuchte nach Anspruch 1 oder 2, **dadurch gekennzeichnet,** daß das elastische Element in Rastausnehmungen der Lagerhülse eingreift.

4. Film- oder Videoleuchte nach einem der Ansprüche 1 bis 3, wobei das Gehäuseteil (10') verschwenkbar ist und die Lichtklappe (18) an der freien, zur Schwenkachse entgegengesetzten Seite des Gehäuseteils angelenkt ist, die mit einem selbsttätigen, ein Verriegelungselement und eine mit ihm zusammenwirkende Verriegelungsöffnung aufweisenden Verriegelungsmechanismus zusammenwirkt, **dadurch gekennzeichnet,** daß das Verriegelungselement ein in der Lagerhülse (12) in ihrer Längsrichtung zwischen zwei Stellungen verschiebbarer Verriegelungsstift (32) ist, der von einem Federelement (30) in die eine Stellung beaufschlagt wird, in der er über das verschwenkbare Gehäuseteil (10') vorspringt, und der mittels eines Betätigungsorgans (34) gegen die Kraft des Federelementes (30) in die andere Stellung verschiebbar ist, in der er nicht aus dem verschwenkbaren Gehäuseteil (10') vorspringt.

EP 0 322 467 A1

87119196.1

Europäisches Patentamt

# EUROPÄISCHER RECHERCHENBERICHT

Nummer der Anmeldung

EP 87 11 9196

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-1 744 369 (G. DIETZ et al.)<br>* Seite 2, Zeilen 105-109; Figuren 1,3 * | 1 | G 03 B 15/06 |
| A | FR-A-1 264 215 (R. CARRE)<br>* Seiten 1,2; Figuren 2,3 * | 2,4 | |
| A | DE-U-8 619 907 (O. MEINZER GmbH)<br>* Seiten 7,8; Figuren 1-4 * | 2,4 | |

RECHERCHIERTE SACHGEBIETE (Int. Cl.4)

G 03 B 15/06
G 03 B 15/02
F 21 V 17/02
F 21 V 21/26

Der vorliegende Recherchenbericht wurde für alle Patentansprüche erstellt

| Recherchenort | Abschlußdatum der Recherche | Prüfer |
|---|---|---|
| DEN HAAG | 15-09-1988 | BOEYKENS J.W. |